# EUROPÄISCHE PATENTSCHRIFT

(11) **EP 3 954 027 B1**
(45) Veröffentlichungstag und Bekanntmachung des Hinweises auf die Patenterteilung: **19.06.2024**
(21) Anmeldenummer: 20722233.2
(22) Anmeldetag: 17.04.2020
(51) Int. Cl.: H02K 15/00, G01R 31/34, B62D 57/024

(54) **PRÜFFAHRZEUG**
INSPECTION VEHICLE
VÉHICULE DE CONTRÔLE

(30) Priorität: 17.05.2019 DE 102019207248
(43) Veröffentlichungstag der Anmeldung: 16.02.2022
(73) Patentinhaber: Siemens Energy Global GmbH & Co. KG, 81739 München (DE)
(72) Erfinder: BORGMANN, Christian, 46284 Dorsten (DE); CLOSSEN-VON LANKEN SCHULZ, Michael, 47661 Issum (DE); DREISCHER, Paul, 44892 Bochum (DE); OBERMAYR, Stefan, 47199 Duisburg (DE)
(86) Internationale Anmeldenummer: PCT/EP2020/060846
(87) Internationale Veröffentlichungsnummer: WO 2020/233917

(56) Entgegenhaltungen:
- EP-A1- 2 345 902
- DE-A1-102017 220 274
- US-A1- 2013 140 801
- ZHANG GEORGE ET AL: "A modular air-gap crawler for motor and generator in-situ inspection", 2015 IEEE INTERNATIONAL CONFERENCE ON INDUSTRIAL TECHNOLOGY (ICIT), IEEE, 17. März 2015 (2015-03-17), Seiten 3166-3171, XP032785508, DOI: 10.1109/ICIT.2015.7125565 [gefunden am 2015-06-16]

## Beschreibung

Die Erfindung betrifft ein Prüffahrzeug, das dazu ausgelegt ist, in den Luftspalt zwischen einem Läufer und einem Stator einer elektrischen Maschine, insbesondere eines Generators eingesetzt und auf dem im Wesentlichen zylindrischen Außenumfang des Läufers bewegt zu werden, um den Außenumfang des Läufers und/oder den Innenumfang des Stators auf Beschädigungen zu prüfen, umfassend ein insbesondere im Wesentlichen rechteckig ausgebildetes Gehäuse, das eine zur Hauptfahrrichtung weisende Gehäusevorderseite, eine gegenüberliegende Gehäuserückseite, einander gegenüber angeordnete, die Gehäusevorderseite und die Gehäuserückseite miteinander verbindende Gehäuselängsseiten, eine im eingesetzten Zustand des Prüffahrzeugs zum Läufer weisende Gehäuseunterseite und eine gegenüberliegende Gehäuseoberseite aufweist, Prüftechnik, die zumindest überwiegend in dem Gehäuse aufgenommen ist, und zumindest vier Antriebsgruppen.

Der Läufer und der Stator eines Generators einer stationären Gasturbinenanlage werden in regelmäßigen Revisionsintervallen und gegebenenfalls beim Auftreten außergewöhnlicher Ereignisse, wie beispielsweise im Falle eines Lastabwurfs, einer visuellen Prüfung unterzogen, um insbesondere thermische Verfärbungen, mechanische Veränderungen in Form von Kratzer, Schlägen, Teileverschiebungen oder dergleichen, lose Teile, Fremdkörper etc. festzustellen und zu orten. Zur Ermöglichung eines visuellen Zugangs wird der Läufer aus dem Stator ausgebaut bzw. gezogen. Es folgt eine visuelle Inspektion durch das Prüfpersonal durch Inaugenscheinnahme. Mögliche Befunde werden fotographisch dokumentiert. Erst nach abgeschlossener Prüfung und Bewertung der Prüfergebnisse und gegebenenfalls erforderlicher Reparaturarbeiten kann der Generator wieder zusammengebaut und in Betrieb genommen werden. Das Ziehen des Läufers ist mit großem Aufwand und hohen Kosten verbunden. Vor diesem Hintergrund wäre es wünschenswert, die Inspektion im zusammengebauten Zustand des Generators durchführen zu können, so dass im Falle einer Befundfreiheit auf den Ausbau des Läufers verzichtet werden kann.

Eine Möglichkeit einer visuellen Inspektion im zusammengebauten Zustand besteht grundsätzlich in der Verwendung eines konventionellen Industrieendoskops. Dies gilt jedoch nicht für Generatoren stationärer Gasturbinenanlagen mit Läuferlängen von mehreren Metern.

Ferner sind Prüffahrzeuge bekannt, die in den Luftspalt zwischen Läufer und Stator eingesetzt werden, wie beispielsweise das von der Firma ABB unter dem Produktnamen "Air Gas Inspector" angebotene Crawler-System. Dieses System umfasst ein im Wesentlichen rechteckig ausgebildetes Gehäuse, das eine zur Hauptfahrrichtung weisende Gehäusevorderseite, eine gegenüberliegende Gehäuserückseite, einander gegenüber angeordnete, die Gehäusevorderseite und die Gehäuserückseite miteinander verbindende Gehäuselängsseiten, eine im eingesetzten Zustand des Prüffahrzeugs zum Läufer weisende Gehäuseunterseite und eine gegenüberliegende Gehäuseoberseite aufweist, Prüftechnik, die zumindest überwiegend in dem Gehäuse aufgenommen ist, und vier Antriebsgruppen. Die ersten beiden Antriebsgruppen sind an den Gehäuselängsseiten um sich in Hauptfahrrichtung erstreckende Schwenkachsen auf- und abwärts schwenkbar gehalten. Die beiden übrigen Antriebsgruppen sind wiederum an den ersten beiden Antriebsgruppen schwenkbar um sich ebenfalls in Hauptfahrrichtung erstreckende Schwenkachsen auf- und abwärts schwenkbar gehalten. Entsprechend legen sich die einzelnen Antriebsgruppen bei axialer Fahrt über einen Läufer an dessen Umfang an. Jede Antriebsgruppe verfügt über einen Kettentrieb, der die Vorwärtsbewegung des Crawler-Systems ermöglicht. Der Einsatz eines solchen Crawler-Systems zur visuellen Inspektion von Läufer und Stator ist bei vielen Generatoren insbesondere aus dem Industriebereich jedoch nicht möglich, da der Luftspalt zwischen dem Läufer und dem Stator meist nur über einen einseitigen Zugang auf der 12-Uhr-Position zugänglich ist, diese Crawler-Systeme aber nach jeder Prüffahrt in axialer Richtung des Läufers in Umfangsrichtung manuell versetzt werden müssen, um die nächste Prüffahrt in axialer Richtung durchführen zu können.

Die EP 2 345 902 A1 offenbart ein Prüfvehikel für einen Generator, das sich in dem Spalt zwischen Rotor und Stator bewegen kann. Die Fortbewegung erfolgt durch magnetische Wälzlager, die sich durch magnetische Anziehungskräfte am Rotor halten.

Ausgehend von diesem Stand der Technik ist es eine Aufgabe der vorliegenden Erfindung, eine alternative Prüfung der zuvor beschriebenen Art zu ermöglichen.

Zur Lösung dieser Aufgabe schafft die vorliegende Erfindung ein Prüffahrzeug der eingangs genannten Art, das dadurch gekennzeichnet ist, dass die Antriebsgruppen paarweise einander gegenüberliegend an den Gehäuselängsseiten gehalten sind, dass jede Antriebsgruppe zumindest zwei Räder aufweist, die durch separate Motoren drehend um sich parallel zueinander und senkrecht zur Hauptfahrrichtung erstreckende Radachsen antreibbar sind, und dass jede Antriebsgruppe schwenkbar um eine sich parallel zu den Radachsen erstreckende erste Schwenkachse an einem Zwischenelement befestigt ist, das wiederum schwenkbar um eine sich parallel zu der ersten Schwenkachse erstreckende zweite Schwenkachse sowie auf- und abwärts schwenkbar um eine sich senkrecht zur zweiten Schwenkachse erstreckende dritte Schwenkachse am Gehäuse befestigt ist, wobei die Schwenkbewegung einer Antriebsgruppe um ihre dritte Schwenkachse mit der Schwenkbewegung der gegenüberliegenden Antriebsgruppe um ihre dritte Schwenkachse gekoppelt ist. Diese Ausbildung und Anordnung der Antriebsgruppen ermöglicht es, das erfindungsgemäße Prüffahrzeug auf einem Läufer in jeder Richtung zu fahren, zu lenken und zu wenden. Es kann somit, nachdem es auf dem Läufer aufgesetzt wurde, in allen Richtungen frei bewegt werden. Dies ermöglicht auch die Inspektion des Läufers und des Stators von Generatoren, bei denen der Luftspalt zwischen dem Läufer und dem Stator nur über einen einseitigen Zugang auf der 12-Uhr-Position zugänglich ist, ohne hierfür den Läufer ziehen zu müssen. Entsprechend kann die Inspektion schnell und preiswert durchgeführt werden. Die Bedienung des Fahrzeugs und der Prüftechnik erfolgt bevorzugt vollständig ferngesteuert, also kabellos. Die Lenkung wird vorteilhaft realisiert, indem analog zu einem Kettenfahrzeug die Räder der Antriebsgruppen beider Seiten mit unterschiedlichen Geschwindigkeiten angetrieben werden.

Gemäß einer Ausgestaltung der vorliegenden Erfindung weist die Prüftechnik zumindest eine Kamera und eine Beleuchtungseinheit zur Ausleuchtung des Bildbereiches der zumindest einen Kamera auf, wobei die Beleuchtungseinheit in die Kamera integriert sein kann. Zusätzlich oder alternativ zu einer oder zu mehreren Kameras kann die Prüftechnik aber auch andere Prüfgeräte aufweisen, beispielsweise Ultraschallprüfgeräte oder dergleichen.

Bevorzugt ist die Kamera im Innern des Gehäuses angeordnet und auf einen Spiegel gerichtet, der im Innern des Gehäuses zwischen zwei einander gegenüberliegend an der Gehäuseunterseite und an der Gehäuseoberseite vorgesehenen Fenstern angeordnet und derart um eine Spiegelschwenkachse insbesondere motorisch schwenkbar gehalten ist, dass die Kamera in Abhängigkeit von der Schwenkstellung des Spiegels den Läufer durch das untere Fenster oder den Stator durch das obere Fenster betrachtet. Entsprechend können mit einer einzelnen Kamera sowohl die Außenumfangsfläche des Läufers als auch die Innenumfangsfläche des Stators inspiziert werden.

Vorteilhaft ist die Kamera relativ zum Spiegel insbesondere motorisch vor und zurück bewegbar. Da sich die Außenumfangsfläche des Läufers und die Innenumfangsfläche des Stators in unterschiedlichen Abständen zum Gehäuse befinden, kann auf diese Weise der Fokus der Kamera in Abhängigkeit zu der zu inspizierenden Fläche justiert werden.

Die Gehäuseoberseite oberhalb der Kamera ist vorteilhaft mit einer Durchgangsöffnung versehen, wobei die Kamera insbesondere motorisch auf- und abwärts zwischen einer ersten Stellung, in der sie innerhalb des Gehäuses angeordnet und auf den Spiegel gerichtet ist, und einer zweiten Stellung, in der sie außerhalb des Gehäuses angeordnet ist, durch die Durchgangsöffnung bewegbar ist. In der ersten Stellung kann mit der Kamera somit der Läufer oder der Stator inspiziert werden. In der zweiten Stellung ist die Kamera in Hauptfahrrichtung ausgerichtet, so dass ein Bediener sehen kann, wohin er das Prüffahrzeug lenken muss. Insgesamt ist somit nur eine einzelne Kamera erforderlich. Grundsätzlich ist es natürlich aber auch möglich, mehrere Kameras vorzusehen, beispielsweise eine Kamera zur Prüfung der Läuferoberfläche, eine zur Prüfung der Statoroberfläche und eine weitere für den Blick in Hauptfahrrichtung.

Bevorzugt werden die Prüftechnik und die Motoren über zumindest einen innerhalb des Gehäuses angeordneten Akkumulator mit Energie versorgt.

Die Zwischenelemente einander gegenüber angeordneter Antriebsgruppen sind vorteilhaft über einen Hebelmechanismus derart miteinander gekoppelt, dass, wenn eine der beiden Antriebsgruppen um ein vorbestimmtes Maß um die ihr zugeordnete dritte Schwenkachse abwärts geschwenkt wird, die andere der beiden Antriebsgruppen um ein entsprechendes Maß aufwärts um die ihr zugeordnete dritte Schwenkachse geschwenkt wird, und umgekehrt. Entsprechend wird auch bei Schrägfahrten über einen Läufer sichergestellt, dass die Antriebsgruppen und somit ihre jeweiligen Räder stets optimal positioniert sind.

Gemäß einer Ausgestaltung der vorliegenden Erfindung weist jede Antriebsgruppe drei in Hauptfahrrichtung versetzt zueinander angeordnete Räder auf, die jeweils durch separate Motoren drehend um ihre Radachsen angetrieben werden. Auf diese Weise wird sichergestellt, dass, auch wenn sich eines der Räder beispielsweise in einer Luftkühlbohrung eines Läufers verklemmen sollte, der Vortrieb des Fahrzeugs über die anderen Räder gewährleistet ist.

Vorteilhaft sind zumindest an den Unterseiten der Antriebsgruppen Magnete angeordnet, bevorzugt auch an der Gehäuseunterseite. Über solche Magnete wird der für den Vortrieb des Fahrzeugs gewünschte Anpressdruck sichergestellt. Auch ist es möglich, das Fahrzeug über Kopf entlang eines Läufers zu bewegen.

Bevorzugt beträgt die Gesamthöhe des Fahrzeugs, wenn es auf einem ebenen Untergrund aufgesetzt ist, weniger als 20mm, besser noch weniger als 16mm. Entsprechend lassen sich fast alle industriellen Generatoren mit dem erfindungsgemäßen Fahrzeug inspizieren.

Weitere Merkmale und Vorteile der vorliegenden Erfindung werden anhand der nachfolgenden Beschreibung eines Prüffahrzeugs gemäß einer Ausführungsform der vorliegenden Erfindung unter Bezugnahme auf die beiliegende Zeichnung deutlich. Darin ist
- Figur 1: eine perspektivische Rückansicht eines Prüffahrzeugs gemäß einer Ausführungsform der vorliegenden Erfindung von schräg oben, wobei sich eine Kamera in einer ersten unteren Stellung befindet;
- Figur 2: eine Ansicht analog zu Figur 1, wobei sich die Kamera in einer zweiten oberen Stellung befindet;

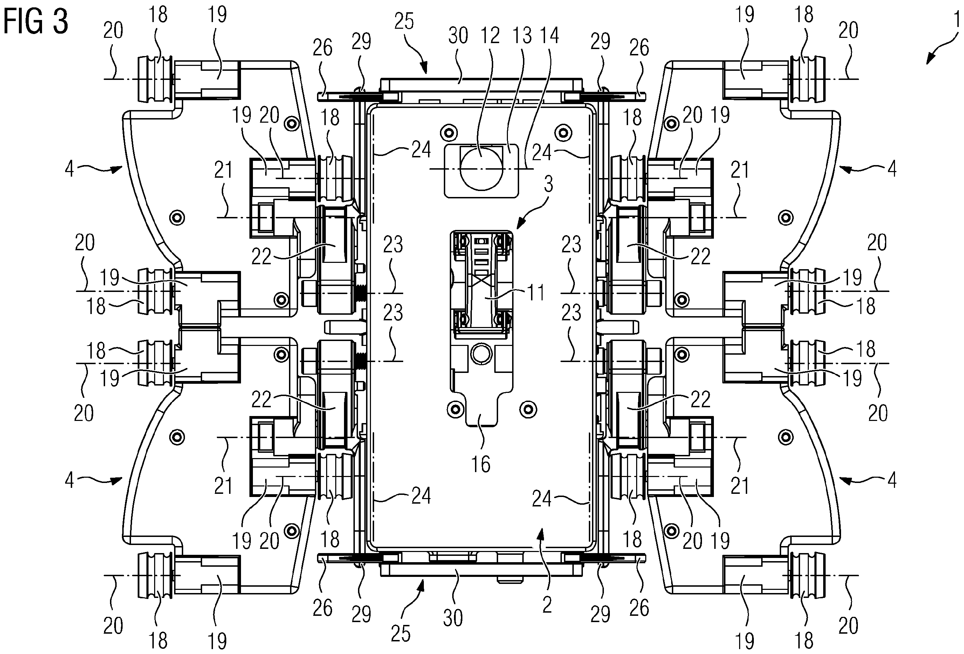

- Figur 3: eine Draufsicht des in Figur 2 gezeigten Prüffahrzeugs;

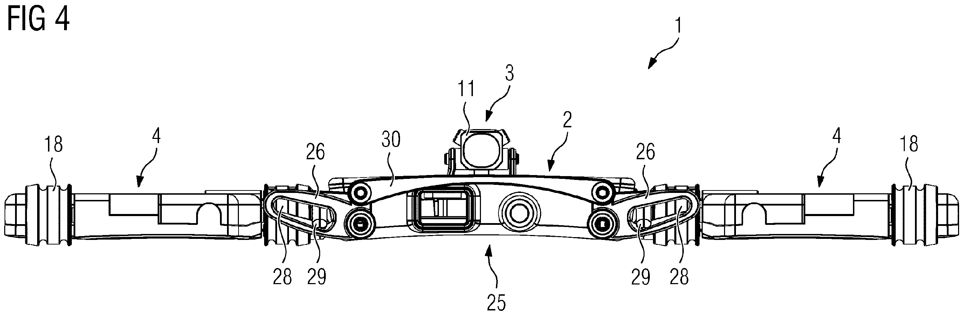

- Figur 4: eine Vorderansicht des in Figur 2 gezeigten Prüffahrzeugs und
- Figur 5: eine perspektivische Ansicht eines Prüffahrzeugs während einer Schrägfahrt über einen Läufer in modifizierter Ausführung zur Figur 1.

Die Figuren zeigen ein Prüffahrzeug 1 gemäß einer Ausführungsform der vorliegenden Erfindung, das dazu ausgelegt ist, in den Luftspalt zwischen einem Läufer und einem Stator einer elektrischen Maschine, insbesondere eines Generators einer stationären Gasturbinenanlage eingesetzt und auf dem im wesentlichen zylindrischen Außenumfang des Läufers bewegt zu werden, um den Außenumfang des Läufers und/oder den Innenumfang des Stators auf Beschädigungen zu prüfen. Das Prüffahrzeug 1 umfasst als Hauptkomponenten ein Gehäuse 2, eine Prüftechnik 3, die im Gehäuse 2 aufgenommen ist, und vier Antriebsgruppen 4.

Das Gehäuse 2 ist im Wesentlichen rechteckig ausgebildet. Es umfasst eine in durch den Pfeil 5 gekennzeichnete Hauptfahrrichtung weisende Gehäusevorderseite 6, eine gegenüberliegende Gehäuserückseite 7, einander gegenüber angeordnete, die Gehäusevorderseite 6 und die Gehäuserückseite 7 miteinander verbindende Gehäuselängsseiten 8, eine im eingesetzten Zustand des Prüffahrzeugs 1 zum Läufer weisende Gehäuseunterseite 9 und eine gegenüberliegende Gehäuseoberseite 10.

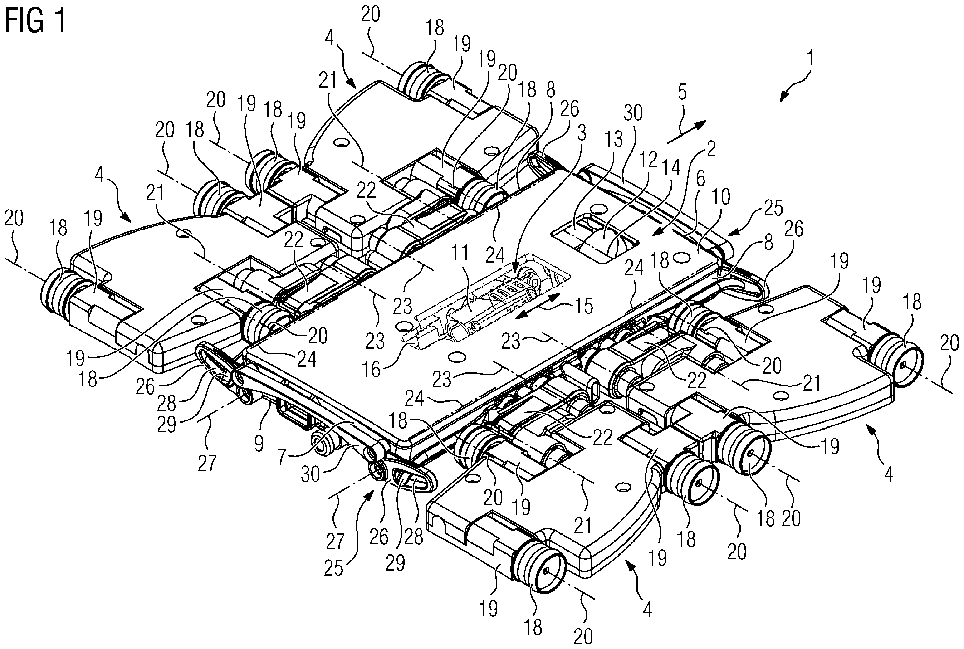

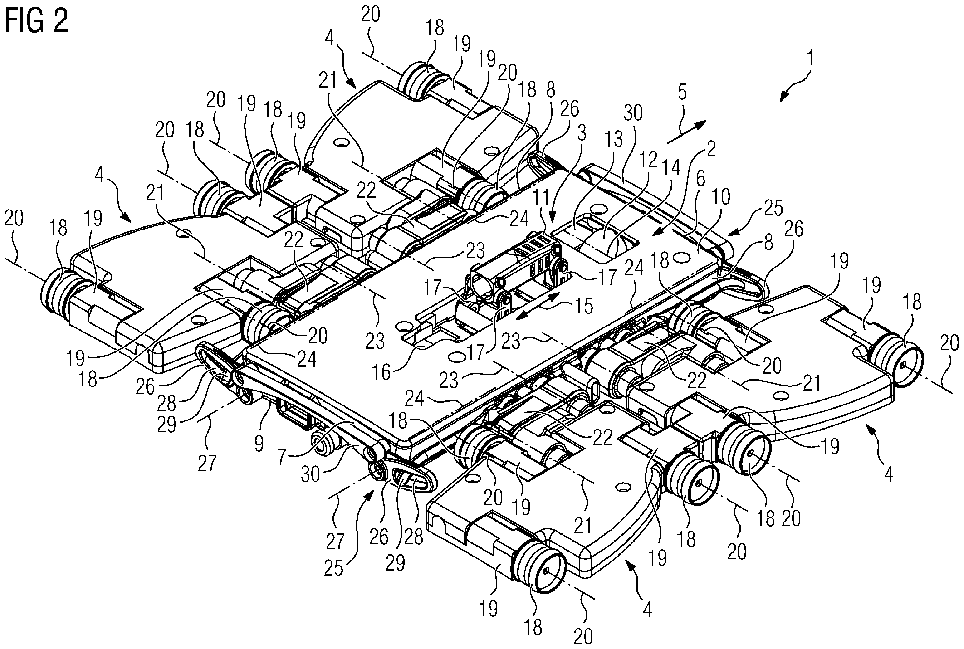

Innerhalb des Gehäuses 2 ist die Prüftechnik 3 aufgenommen, die vorliegend eine Kamera 11 mit integrierter Beleuchtungseinheit zur Ausleuchtung des Bildbereiches der Kamera sowie einen Spiegel 12 aufweist. Die Kamera 11 ist in Hauptfahrrichtung auf den Spiegel 12 gerichtet, der im Inneren des Gehäuses 2 zwischen zwei einander gegenüberliegend an der Gehäuseunterseite 9 und an der Gehäuseoberseite 10 vorgesehenen Fenstern 13 angeordnet und derart um eine sich quer zur Hauptfahrrichtung erstreckende Spiegelschwenkachse 14 motorisch schwenkbar gehalten ist, dass die Kamera 11 in Abhängigkeit von der Schwenkstellung des Spiegels 12 wahlweise den Läufer durch das untere Fenster 13 oder den Stator durch das obere Fenster 13 betrachtet, wenn das Prüffahrzeug 1 auf einen Läufer aufgesetzt ist. Die Kamera 11 ist entlang nicht näher dargestellter Führungen motorisch relativ zum Spiegel 12 in Richtung des Pfeils 15 vor- und zurück bewegbar, um den Fokus der Kamera 11 optimal einstellen zu können. Alternativ kann auf eine solche Beweglichkeit aber auch verzichtet und ein fester Fokus eingestellt werden. Ferner ist die Kamera 11 motorisch auf- und abwärts zwischen einer ersten unteren Stellung, in der sie innerhalb des Gehäuses 2 angeordnet und auf dem Spiegel 12 gerichtet ist, und einer zweiten oberen Stellung bewegbar, in der sie durch eine oberhalb der Kamera 11 an der Gehäuseoberseite 10 vorgesehene Durchgangsöffnung 16 aus dem Gehäuse 2 geführt ist. Die erste Stellung ist in Figur 1 dargestellt, die zweite Stellung in Figur 2. Die Auf- und Abwärtsbewegung wird vorliegend über motorisch angetriebene Schwenkhebel 17 realisiert. In der ersten Stellung kann mit der Kamera 11 somit der Läufer oder der Stator inspiziert werden. In der zweiten Stellung ist die Kamera 11 in Hauptfahrrichtung ausgerichtet, so dass ein Bediener sehen kann, wohin er das Prüffahrzeug 1 lenken muss.

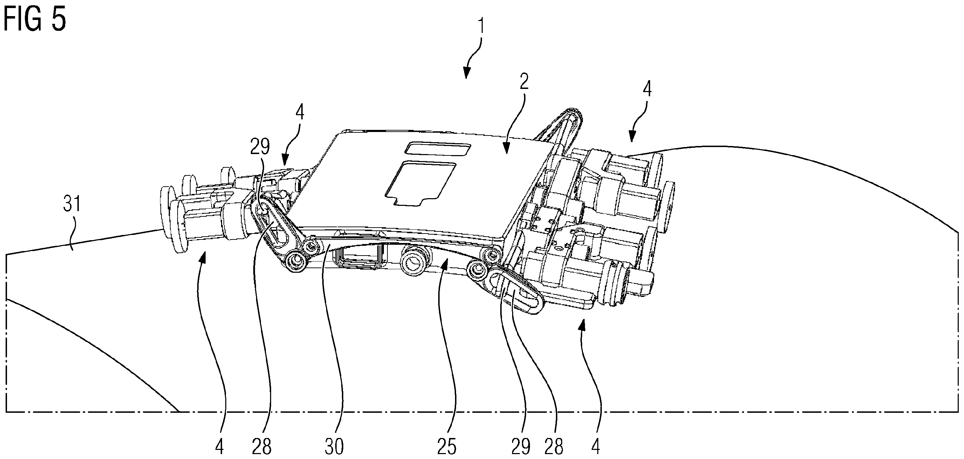

Die Antriebsgruppen 4 sind paarweise einander gegenüberliegend an den Gehäuselängsseiten 8 gehalten. Jede Antriebsgruppe 4 weist vorliegend drei in Hauptfahrrichtung versetzt zueinander angeordnete Räder 18 auf, die jeweils durch separate Motoren 19 drehend um sich parallel zueinander und senkrecht zur Hauptfahrrichtung erstreckender Radachsen 20 antreibbar sind. Jede Antriebsgruppe 4 ist schwenkbar um eine sich parallel zu den Radachsen 20 erstreckende erste Schwenkachse 21 an einem Zwischenelement 22 befestigt, das wiederum schwenkbar um eine sich parallel zu der ersten Schwenkachse 21 erstreckende zweite Schwenkachse 23 sowie auf- und abwärts schwenkbar um eine sich senkrecht zur zweiten Schwenkachse 23 in Hauptfahrrichtung erstreckende dritte Schwenkachse 24 am Gehäuse 2 befestigt ist. Die Schwenkbewegung einer Antriebsgruppe 4 um ihre dritte Schwenkachse 24 ist mit der Schwenkbewegung der gegenüberliegenden Antriebsgruppe 4 um ihre dritte Schwenkachse 24 gekoppelt. Diese Kopplung erfolgt vorliegend jeweils über einen Hebelmechanismus 25, wobei sich der Hebelmechanismus 25 der vorderen beiden Antriebsgruppen 4 entlang der Gehäusevorderseite 6 und der Hebelmechanismus 25 der hinteren beiden Antriebsgruppen 4 entlang der Gehäuserückseite 7 erstreckt. Jeder Hebelmechanismus 25 umfasst zwei L-förmige Hebel 26, die jeweils drehbar um sich parallel zueinander in Hauptfahrrichtung erstreckende Drehachsen 27 an der Gehäusevorderseite 6 bzw. der Gehäuserückseite 7 befestigt sind. Seitlich auswärts gerichtete Schenkel der jeweiligen Hebel 26 sind mit Langlöchern 28 versehen, in die ein freies Ende eines Betätigungsabschnitts 29 eines zugeordneten Zwischenelementes 22 greift. An den jeweils anderen Schenkeln sind die Hebel 26 eines Hebelmechanismus 25 über eine Verbindungsstange 30 gelenkig miteinander verbunden. Wird somit eine von zwei einander gegenüber angeordneten Antriebsgruppen 4 um ein vorbestimmtes Maß um die ihr zugeordnete dritte Schwenkachse 24 abwärts geschwenkt, so wird die andere der beiden Antriebsgruppen 4 um ein entsprechendes Maß aufwärts um die ihr zugeordnete Schwenkachse 24 geschwenkt und umgekehrt, wie es insbesondere in Figur 5 gut zu erkennen ist.

Die Abmessungen des Gehäuses 2 und der Antriebsgruppen 4 sind derart gewählt, dass die Gesamthöhe H des Prüffahrzeugs 1, wenn sich die Kamera 11 in ihrer ersten Stellung befindet, weniger als 20mm beträgt, besser noch weniger als 16mm. An den Unterseiten des Gehäuses 2 und der Antriebsgruppen sind eine Vielzahl von nicht näher dargestellten Magneten angeordnet, die das Prüffahrzeug 1, wenn es gemäß Figur 5 auf einen Läufer 31 aufgesetzt ist, am Läufer 31 halten, wobei die Stärke, Anordnung und Anzahl der Magneten, bei denen es sich beispielsweise um Neodynmagneten handelt, insbesondere derart gewählt ist, dass das Prüffahrzeug 1 auch über Kopf entlang des Läufers 31 bewegt werden kann. Die Ansteuerung der Prüftechnik 3 und der Antriebsgruppen 4 erfolgt vorliegend funk- bzw. ferngesteuert, also kabellos.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den durch den unabhängigen Anspruch definierten Schutzumfang der Erfindung zu verlassen.

## Patentansprüche

1. Prüffahrzeug (1),
das dazu ausgelegt ist, in den Luftspalt zwischen einem Läufer (31) und einem Stator einer elektrischen Maschine, insbesondere eines Generators, eingesetzt und auf dem im Wesentlichen zylindrischen Außenumfang des Läufers (31) bewegt zu werden, um den Außenumfang des Läufers (31) und/oder den Innenumfang des Stators auf Beschädigungen zu prüfen, umfassend
- ein insbesondere im Wesentlichen rechteckig ausgebildetes Gehäuse (2), das eine zur Hauptfahrrichtung weisende Gehäusevorderseite (6), eine gegenüberliegende Gehäuserückseite (7), einander gegenüber angeordnete, die Gehäusevorderseite (6) und die Gehäuserückseite (7) miteinander verbindende Gehäuselängsseiten (8), eine im eingesetzten Zustand des Prüffahrzeugs (1) zum Läufer (31) weisende Gehäuseunterseite (9) und eine gegenüberliegende Gehäuseoberseite (10) aufweist,
- Prüftechnik (3), die zumindest überwiegend in dem Gehäuse (2) aufgenommen ist, und
- zumindest vier Antriebsgruppen (4),
wobei die Antriebsgruppen (4) paarweise einander gegenüberliegend an den Gehäuselängsseiten (8) gehalten sind, jede Antriebsgruppe (4) zumindest zwei Räder (18) aufweist, die durch separate Motoren (19) drehend um sich parallel zueinander und senkrecht zur Hauptfahrrichtung erstreckende Radachsen (20) antreibbar sind, und jede Antriebsgruppe (4) schwenkbar um eine sich parallel zu den Radachsen (20) erstreckende erste Schwenkachse (21) an einem Zwischenelement (22) befestigt ist, das wiederum schwenkbar um eine sich parallel zu der ersten Schwenkachse (21) erstreckende zweite Schwenkachse (23) sowie auf- und abwärts schwenkbar um eine sich senkrecht zur zweiten Schwenkachse (23) erstreckende dritte Schwenkachse (24) am Gehäuse (2) befestigt ist,
wobei die Schwenkbewegung einer Antriebsgruppe (4) um ihre dritte Schwenkachse (24) mit der Schwenkbewegung der gegenüberliegenden Antriebsgruppe (4) um ihre dritte Schwenkachse (24) gekoppelt ist.

2. Prüffahrzeug (1) nach Anspruch 1,
**dadurch gekennzeichnet, dass**
die Prüftechnik (3) zumindest eine Kamera (11) und eine Beleuchtungseinheit zur Ausleuchtung des Bildbereichs der zumindest einen Kamera aufweist,
wobei die Beleuchtungseinheit in die Kamera (11) integriert sein kann.

3. Prüffahrzeug (1) nach Anspruch 2,
**dadurch gekennzeichnet, dass**
die Kamera (11) im Innern des Gehäuses (2) angeordnet und auf einen Spiegel (12) gerichtet ist, der im Innern des Gehäuses (2) zwischen zwei einander gegenüberliegend an der Gehäuseunterseite (9) und an der Gehäuseoberseite (10) vorgesehenen Fenstern (13) angeordnet und derart um eine Spiegelschwenkachse (14) insbesondere motorisch schwenkbar gehalten ist,
dass die Kamera (11) in Abhängigkeit von der Schwenkstellung des Spiegels (12) den Läufer (31) durch das untere Fenster (13) oder den Stator durch das obere Fenster (13) betrachtet.

4. Prüffahrzeug (1) nach Anspruch 2 oder 3,
**dadurch gekennzeichnet, dass**
die Kamera (11) relativ zum Spiegel (12) insbesondere motorisch vor und zurück bewegbar ist.

5. Prüffahrzeug (1) nach Anspruch 3 oder 4,
**dadurch gekennzeichnet, dass**
die Kamera (11) in Hauptfahrrichtung ausgerichtet ist, dass die Gehäuseoberseite (10) oberhalb der Kamera (11) mit einer Durchgangsöffnung (16) versehen ist, und
dass die Kamera (11) insbesondere motorisch auf- und abwärts zwischen einer ersten Stellung, in der sie innerhalb des Gehäuses (2) angeordnet und auf den Spiegel (12) gerichtet ist,
und einer zweiten Stellung, in der sie außerhalb des Gehäuses (2) angeordnet ist, durch die Durchgangsöffnung (16) bewegbar ist.

6. Prüffahrzeug (1) nach einem der vorhergehenden Ansprüche,
**dadurch gekennzeichnet, dass**
die Prüftechnik (3) und die Motoren (19) über zumindest einen innerhalb des Gehäuses (2) angeordneten Akkumulator mit Energie versorgt werden.

7. Prüffahrzeug (1) nach einem der vorhergehenden Ansprüche,
**dadurch gekennzeichnet, dass**
die Zwischenelemente (22) einander gegenüber angeordneter Antriebsgruppen (4) über einen Hebelmechanismus (25) derart miteinander gekoppelt sind, dass, wenn eine der beiden Antriebsgruppen (4) um ein vorbestimmtes Maß um die ihr zugeordnete dritte Schwenkachse (24) abwärts geschwenkt wird, die andere der beiden Antriebsgruppen (4) um ein entsprechendes Maß aufwärts um die ihr zugeordnete dritte Schwenkachse (24) geschwenkt wird, und umgekehrt.

8. Prüffahrzeug (1) nach einem der vorhergehenden Ansprüche,
**dadurch gekennzeichnet, dass**
jede Antriebsgruppe (4) drei in Hauptfahrrichtung versetzt zueinander angeordnete Räder (18) aufweist, die jeweils durch separate Motoren (19) drehend um ihre Radachsen (20) angetrieben werden.

9. Prüffahrzeug (1) nach einem der vorhergehenden Ansprüche,
**dadurch gekennzeichnet, dass**
zumindest an den Unterseiten der Antriebsgruppen (4) Magnete angeordnet sind.

10. Prüffahrzeug (1) nach einem der vorhergehenden Ansprüche,
**dadurch gekennzeichnet, dass**
dessen Gesamthöhe (H), wenn es auf einem ebenen Untergrund aufgesetzt ist, weniger als 20mm, besser noch weniger als 16mm beträgt.

## Claims

1. Inspection vehicle (1)
which is conceived to be inserted into the air gap between a rotor (31) and a stator of an electric machine, in particular of a generator, and to be moved on the substantially cylindrical external circumference of the rotor (31) so as to inspect the external circumference of the rotor (31) and/or the internal circumference of the stator for damage, said inspection vehicle (1) comprising
- a housing (2) which is configured so as to be in particular substantially rectangular and has a housing front side (6) that points in the main direction of travel, an opposite housing rear side (7), housing longitudinal sides (8) that are disposed so as to be mutually opposite and connect the housing front side (6) and the housing rear side (7) to one another, a housing lower side (9) that in the inserted state of the inspection vehicle (1) points toward the rotor (31), and an opposite housing upper side (10);
- inspection technology (3) which is at least largely received in the housing (2); and
- at least four traction groups (4);
wherein
the traction groups (4) are held in pairs so as to be opposite one another on the housing longitudinal sides (8), each traction group (4) has at least two wheels (18) which by separate motors (19) are able to be driven to as to rotate about mutually parallel wheel axes (20) that extend so as to be perpendicular to the main direction of travel; and
each traction group (4) is fastened to an intermediate element (22) so as to be pivotable about a first pivot axis (21) that extends so as to be parallel to the wheel axes (20), said intermediate element (22) in turn being fastened to the housing (2) so as to be pivotable about a second pivot axis (23) that extends so as to be parallel to the first pivot axis (21), and so as to be pivotable up and down about a third pivot axis (24) that extends so as to be perpendicular to the second pivot axis (23),
wherein the pivoting movement of one traction group (4) about the third pivot axis (24) thereof is coupled to the pivoting movement of the opposite traction group (4) about the third pivot axis (24) thereof.

2. Inspection vehicle (1) according to Claim 1,
**characterized in that**
the inspection technology (3) has at least one camera (11) and one illumination unit for illuminating the imaging region of the at least one camera,
wherein the illumination unit can be integrated in the camera (11) .

3. Inspection vehicle (1) according to Claim 2,
**characterized in that**
the camera (11) is disposed in the interior of the housing (2) and directed onto a mirror (12) which in the interior of the housing (2) is disposed between two windows (13) provided so as to be opposite one another on the housing lower side (9) and on the housing upper side (10) and is held so as to be pivotable, in particular in a motorized manner, about a mirror pivot axis (14) in such a manner
that the camera (11), as a function of the pivoted position of the mirror (12), observes the rotor (31) through the lower window (13) or the stator through the upper window (13).

4. Inspection vehicle (1) according to Claim 2 or 3,
**characterized in that**
the camera (11) is able to be moved, in particular in a motorized manner, back and forth relative to the mirror (12).

5. Inspection vehicle (1) according to Claim 3 or 4,
**characterized in that**
the camera (11) is aligned in the main direction of travel,
**in that** the housing upper side (10) above the camera (11) is provided with a passage opening (16), and
**in that** the camera (11) is able to be moved, in particular in a motorized manner, up and down through the passage opening (16) between a first position, in which said camera (11) is disposed within the housing (2) and directed onto the mirror (12),
and a second position, in which said camera (11) is disposed outside the housing (2).

6. Inspection vehicle (1) according to one of the preceding claims,
**characterized in that**
the inspection technology (3) and the motors (19) are supplied with power by way of at least one accumulator that is disposed within the housing (2).

7. Inspection vehicle (1) according to one of the preceding claims,
**characterized in that**
the intermediate elements (22) of traction groups (4) disposed opposite one another, by way of a lever mechanism (25), are coupled to one another in such a manner that, when one of the two traction groups (4) is pivoted downward by a predetermined degree about the third pivot axis (24) assigned to this traction group (4), the other of the two traction groups (4) is pivoted upward by a corresponding degree about the third pivot axis (24) assigned to that traction group (4), and vice versa.

8. Inspection vehicle (1) according to one of the preceding claims,
**characterized in that**
each traction group (4) has three wheels (18) that are disposed so as to be mutually offset in the main direction of travel and by separate motors (19) are in each case driven so as to rotate about the wheel axes (20) of said wheels (18).

9. Inspection vehicle (1) according to one of the preceding claims,
**characterized in that**
magnets are disposed at least on the lower sides of the traction groups (4).

10. Inspection vehicle (1) according to one of the preceding claims,
**characterized in that**
the overall height (H) of said inspection vehicle (1), when the latter is placed on a level surface, is less than 20 mm, preferably even less than 16 mm.

## Revendications

1. Véhicule (1) de contrôle,
qui est conçu pour être inséré entre un rotor (31) et un stator d'une machine électrique, en particulier d'un générateur, et pour être déplacé sur le pourtour extérieur sensiblement cylindrique du rotor (31) afin de contrôler la présence de dommages sur le pourtour extérieur du rotor (31) et/ou sur le pourtour intérieur du stator, comprenant
- une boîte (2), en particulier de constitution sensiblement rectangulaire, qui a un côté (6) avant de boîte tourné vers la direction de déplacement principale, un côté (7) arrière de boîte opposé, des grands côtés (8) de boîte opposés l'un à l'autre et reliant le côté (6) avant de la boîte et le côté (7) arrière de la boîte, un côté (9) inférieur de boîte tourné, alors que le véhicule (1) de contrôle est dans l'état inséré, vers le rotor (31) et un côté (10) supérieur de boîte opposé,
- une technique (3) de contrôle, qui est logée au moins d'une manière prépondérante dans la boîte (2), et
- au moins quatre groupes (4) d'entraînement,
dans lequel
les groupes (4) d'entraînement sont maintenus par paire sur les grands côtés (8) de la boîte, opposés l'un à l'autre, chaque groupe (4) d'entraînement a au moins deux roues (18), qui peuvent être entraînées, par des moteurs (19) distincts, en rotation autour d'essieux (20) s'étendant parallèlement entre eux et perpendiculairement à la direction de déplacement principale, et chaque groupe (4) d'entraînement, pivotant autour d'un premier axe (21) de pivotement s'étendant parallèlement aux essieux (20), est fixé à un élément (22) intermédiaire, qui, pivotant à son tour autour d'un deuxième axe (23) de pivotement s'étendant parallèlement au premier axe (21) de pivotement, ainsi que pivotant vers le haut et vers le bas autour d'un troisième axe (24) de pivotement s'étendant perpendiculairement au deuxième axe (23) de pivotement, est fixé à la boîte (2),
dans lequel le mouvement de pivotement d'un groupe (4) d'entraînement autour de son troisième axe (24) de pivotement est couplé au mouvement de pivotement du groupe (4) d'entraînement opposé autour de son troisième axe (24) de pivotement.

2. Véhicule (1) de contrôle suivant la revendication 1,
**caractérisé en ce que**
la technique (3) de contrôle comporte au moins un appareil (11) photographique et une unité d'éclairage pour éclairer le champ d'image du au moins un appareil photographique,
dans lequel l'unité d'éclairage peut être intégrée à l'appareil (11) photographique.

3. Véhicule (1) de contrôle suivant la revendication 2,
**caractérisé en ce que**
l'appareil (11) photographique est disposé à l'intérieur de la boîte (2) et est dirigé sur un miroir (12), qui, à l'intérieur de la boîte (2), est disposé entre deux hublots (13) opposés l'un à l'autre prévus sur le côté (9) inférieur de la boîte et sur le côté (10) supérieur de la boîte et est maintenu pivotant, en particulier d'une manière motorisée, autour d'un axe (14) de pivotement du miroir,
**en ce que** l'appareil (11) photographique regarde, en fonction de la position en pivotement du miroir (12), le rotor (31) par le hublot (13) inférieur ou le stator par le hublot (13) supérieur.

4. Véhicule (1) de contrôle suivant la revendication 2 ou 3, **caractérisé en ce que**
l'appareil (11) photographique est mobile en va-et-vient, notamment d'une manière motorisée, par rapport au miroir (12).

5. Véhicule (1) de contrôle suivant la revendication 3 ou 4, **caractérisé en ce que**
l'appareil (11) photographique est dirigé dans la direction de déplacement principale,
**en ce que** le côté (10) supérieur de la boîte est pourvu d'une ouverture (16) de traversée au-dessus de l'appareil (11) photographique, et
**en ce que** l'appareil (11) photographique monte et descend, en particulier d'une manière motorisée, par l'ouverture (16) de passage, entre une première position, dans laquelle il est disposé à l'intérieur de la boîte (2) et dirigé sur le miroir (12),
et une deuxième position, dans laquelle il est disposé à l'extérieur de la boîte (2).

6. Véhicule (1) de contrôle suivant l'une des revendications précédentes,
**caractérisé en ce que**
la technique (3) de contrôle et les moteurs (19) sont alimentés en énergie par au moins un accumulateur disposé à l'intérieur de la boîte (2).

7. Véhicule (1) de contrôle suivant l'une des revendications précédentes,
**caractérisé en ce que**
les éléments (22) intermédiaires de groupes (4) d'entraînement disposés en face les uns des autres sont accouplés entre eux par un mécanisme (25) à levier, **en ce que**, si l'un des deux groupes (4) d'entraînement pivote vers le bas, dans une mesure déterminée à l'avance autour du troisième axe (24) de pivotement, qui lui est affecté, l'autre des deux groupes (4) d'entraînement pivote dans une mesure correspondante vers le haut autour du troisième axe (24) de pivotement, qui lui est affecté, et inversement.

8. Véhicule (1) de contrôle suivant l'une des revendications précédentes,
**caractérisé en ce que**
chaque groupe (4) d'entraînement a trois roues (18), qui sont disposées en étant décalées les unes par rapport aux autres dans la direction de déplacement principale et qui sont entraînées chacune par des moteurs (19) distincts en rotation autour de leur essieu (20).

9. Véhicule (1) de contrôle suivant l'une des revendications précédentes,
**caractérisé en ce que**
des aimants sont montés au moins sur les côtés inférieurs des groupes (4) d'entraînement.

10. Véhicule (1) de contrôle suivant l'une des revendications précédentes,
**caractérisé en ce que**
sa hauteur (H) totale, lorsqu'il est mis sur un fond plan, est de moins de 20 mm, mieux encore de moins de 16 mm.
